# EUROPÄISCHE PATENTANMELDUNG

(11) **EP 2 508 388 A2**
(43) Veröffentlichungstag der Anmeldung: **10.10.2012**
(21) Anmeldenummer: 12002379.1
(22) Anmeldetag: 31.03.2012
(51) Int. Cl.: B60L 11/18, B60L 15/20

(54) **Maschine mit Überwachungseinrichtung zur Überführung in einen definierten Ruhezustand und zurück in eine vollständige Betriebsbereitschaft**

(30) Priorität: 07.04.2011 DE 102011016298
(71) Anmelder: INRO Elektrotechnik GmbH, 63811 Stockstadt (DE)
(72) Erfinder: Ries, Michael, 63743 Aschaffenburg (DE)
(74) Vertreter: Pöhner, Wilfried Anton

(57) **Zusammenfassung**

Maschine mit Überwachungseinrichtung bestehend aus einer Steuerung, mittels derer die Aktoren an der Maschine ansteuerbar sind und über Sensoren und deren Istwerte die Auswirkung der Steuerbefehle auf die Aktoren auswertbar sind und einem Hauptschütz zum Zu- und Abschalten der gesamten Energieversorgung, der von der Steuerung ansteuerbar ist und einem manuell zu betätigenden Hauptschalter zum Aktivieren und Deaktivieren der Maschine und der Steuerung, wobei von der Steuerung zumindest einige Sensoren auch nach der Deaktivierung des Hauptschalters weiter überwachbar sind und für jeden Sensor ein Sollwert oder Sollwertebereich speicherbar und abrufbar und mit dem jeweiligen Istwert vergleichbar ist, bei dem eine Abschaltung wenigstens eines Aktors zulässig ist und eine Abschaltung eines Aktors nur dann möglich ist, wenn die Istwerte sämtlicher, relevanter Sensoren den für die Abschaltung abgespeicherten Sollwert oder Sollwertebereich erreicht haben.

## Beschreibung

Die Erfindung bezieht sich auf eine Maschine mit Überwachungseinrichtung zur Überführung in einen definierten Ruhezustand und zurück in eine vollständige Betriebsbereitschaft, bestehend aus einer Steuerung oder einem Teil davon, mittels derer die Aktoren an der Maschine ansteuerbar sind und über Sensoren und deren Istwerte die Auswirkung der Steuerbefehle auf die Aktoren auswertbar sind und einem Hauptschütz zum Zu- und Abschalten der gesamten Energieversorgung, der von der Steuerung ansteuerbar ist und einem manuell zu betätigenden Hauptschalter zum Aktivieren und Deaktivieren der Maschine und der Steuerung.

Auf aktuellem Stand der Technik werden Maschinen aller Art sehr oft durch Steuerungen überwacht, die den Betriebsablauf der Maschine regeln und für die Einhaltung der gewünschten Funktionen tätig sind.

Derartige Steuerungen können im Prinzip auch mit mechanischen Elementen arbeiten, wie z.B. Pneumatikzylindern und Luftüberdruckspeicher, was z.B. in explosionsgefährdeten Bereichen das Risiko einer Entzündung durch Funkenbildung an den Kontakten oder Übertemperatur von Leistungselementen vermeiden würde.

Dennoch ist es auch in diesen Anwendungsfeldern im aktuellen Zeitpunkt üblich, dass fast alle Steuerungsaufgaben mit elektronischen Steuerungen und den darin enthaltenen Mikroprozessoren ausgeführt werden. Derartige Steuerungen sind nicht nur kostengünstiger, sondern bieten dank der fortwährenden Miniaturisierung, Preisreduzierung und Geschwindigkeitsverbesserung aktueller elektronischer Bauelemente einen deutlichen Vorteil bei Preis und Intelligenz. Mit derartigen Steuerungen kann eine Funktion der Maschine oft für sehr vielfältige und von einander sehr stark unterschiedene Anwendungen und Betriebszustände realisiert werden.

Dass sich eine derartige Steuerung nicht nur für den Betrieb der Maschine bei ihrer Hauptfunktion verantwortlich zeigen sollte, sondern auch das Verhalten beim Einschalten und beim Ausschalten der Maschine überprüfen und verantworten sollte, zeigt die Offenlegungsschrift DE 199 57 732. Hier wird ein Kraftfahrzeug mit einem Verbrennungsmotor vorgestellt, bei dem die Einspritzventile für den Kraftstoff von einer übergeordneten Steuerung geöffnet und geschlossen werden. Beschrieben wird, wie die Aktoren - hier die Einspritzventile - die Maschine - hier den Verbrennungsmotor - in Aktion setzen und wie die Steuerung das Resultat dieser Aktivitäten über Sensoren zur Messung des Motordrehmomentes und des Druckes zwischen Ventil und Einspritzdüse sowie der Motordrehzahl erfasst.

Diese Daten werden in der Steuerung mit den Werten verglichen, die unter den jeweiligen Randbedingungen und bei den jeweiligen Einspritzzeitpunkten und Einspritzmengen zu erwarten wären. Bei allzu großer Abweichung des Istwertes vom zulässigen Wert wird eine Fehlermeldung generiert und beim Auftreten eines Fehlers daraus eine Konsequenz für den nächsten Einschaltvorgang gezogen.

Nachteilig ist, dass sich eine derartige Überwachung auf einen Fehlerfall beschränkt. Nachteilig ist auch, dass ganz offensichtlich im Normalbetrieb der Abschaltvorgang darauf beschränkt ist, dass mit dem Hauptschalter für das System - hier dem Schlüssel für das Fahrzeug - die Stromversorgung der Steuerung abgeschaltet wird, sodass die Maschine - hier die Verbrennungskraftmaschine - schon irgendwie zum Stehen kommen wird. Das Verhalten während des Abschaltens ist im Normalbetrieb ebenso wenig "geregelt" wie die Besonderheiten des Einschaltens.

Auf diesem Hintergrund hat sich die Erfindung der Aufgabe gestellt, eine Steuerung zu entwickeln, mit der es möglich ist, beim Abschaltvorgang ebenso wie beim Einschaltvorgang einer Maschine in Abhängigkeit von ihrer jeweiligen Funktion und von den dafür erforderlichen Betriebszuständen die Parameter der Maschine gezielt zu beeinflussen, wobei eine schnellere und sichere, aber maschinenschonende Stillsetzung der Maschine und ein beschleunigter Neustart sowie ganz generell eine verbesserte Erfüllung der Aufgabenstellung an die Maschine das oberste Ziel ist.

Als Lösung lehrt die Erfindung, dass von der Steuerung auch nach der Deaktivierung des Hauptschalters von allen Sensoren weiter Istwerte empfangbar sind und Steuerbefehle an die Aktoren abgebbar und umsetzbar sind und für alle Sensoren ein Sollwert oder ein Sollwertebereich speicherbar und abrufbar ist, den sie im Ruhezustand als Istwert abgeben und für alle Aktoren eine Reihenfolge untereinander und/oder andere Bedingungen für die Phase der Überführung in den Ruhezustand in der Steuerung speicherbar und abrufbar sind und durch Deaktivierung des Hauptschalters von der Steuerung Steuerbefehle an die Aktoren auslösbar sind, mit denen sie in der vorgegebenen Reihenfolge und unter Einhaltung der anderen vorgegebenen Bedingungen in den Ruhezustand überführbar sind.

Die Erfindung beschränkt sich jedoch nicht auf nur auf die Überwachung einer eventuell vor dem Abschalten erforderlichen Phase des Überganges von voller Drehzahl und/oder voller Last zum Stillstand und Leerlauf, sondern erstreckt sich auch nach einer Pause auf die Kontrolle des Wiederanlaufens.

Ein Teil der Überwachungseinrichtung ist eine Steuerung, die auf einige Sensoren und diejenigen Aktoren zugreift, deren Reaktionen an den überwachten Sensoren ablesbar sind. Diese Steuerung greift auf den Hauptschütz zum Zu- und Abschalten der gesamten Energieversorgung zu und wird von einem manuell betätigten Hauptschalter beeinflusst.

Im allgemeinsten Fall kann es eine separate Steuerung sein, die nur für die Phase der Überführung vom Betriebszustand in einen definierten Ruhezustand und dann wieder zurück in eine vollständige Betriebsbereitschaft zuständig ist.

Es ist jedoch auch denkbar, dass diese Steuerung ein Teil derjenigen Steuerung ist, die die Maschine in ihrem Betriebszustand zur Steuerung ihres Normalbetriebes benötigt. Eine Trennung dieser Steuerungsfunktion von den übrigen Steuerungsfunktionen ermöglicht es, die übrige Steuerung bereits abzuschalten, derweil die für die Erreichung des Ruhezustandes zuständige Steuerung noch aktiv ist.

Alternativ kann die Steuerung für den Ruhezustand auch dieselbe Steuerung sein, die die jeweiligen Sensoren und Aktoren auch im Normalbetrieb auswertet und steuert. Bei einer derartigen Konfiguration kann die Steuerung natürlich nach dem Deaktivieren des Hauptschalters nicht abgeschaltet werden, sondern muss als Ganzes nach wie vor mit Betriebsspannung versorgt werden.

Der erfindungsgemäße Ruhezustand ist im allgemeinsten Fall ein "Stand by", bei dem die Aktoren keine Energie mehr benötigen und keine Funktion der Maschine mehr stattfindet, aber alle Aktoren in einer derartigen Position oder einem Zustand verharren, in die(den) sie mit einer möglichst geringen Belastung der Maschine gekommen sind und die für ein Wiederanlaufen der Maschine nach dem Abschluss des Ruhezustandes besonders vorteilhaft ist. Dabei kann es sinnvoll sein, dass z.B. ein Behälter vor dem Übergang in den Ruhezustand noch vollständig befüllt wird, weil dadurch das Risiko einer Korrosion der Behälterinnenwand oder das Risiko des Verstopfens von Leitungen oder Ventilen reduziert wird.

Der Ruhezustand ist entsprechend der Aufgabenstellung dieser Erfindung ein Zustand der Maschine, in dem sie keine oder fast keine Energie mehr verbraucht und in dem die Maschinenelemente keinem weiteren Verschleiß mehr ausgesetzt sind, aber aus dem eine schnelle Rückkehr in die Betriebsbereitschaft möglich ist. Dazu kann es bei bestimmten Maschinentypen und/oder bestimmten Anwendungsfällen auch sinnvoll sein, im Ruhezustand etliche Aktoren von der Steuerung und/oder ihrer Leistungsversorgung zu trennen, sie also abzuschalten. Ebenso kann es sinnvoll sein, auch die gesamte Energieversorgung für die Maschine ebenso wie für die Steuerung abzuschalten, jedoch nur dann, wenn es der erfindungsgemäßen Aufgabe dient.

Es ist ein weiterer, sehr interessanter Gedanke der Erfindung, dass die Abschaltphase ebenso wie die Einschaltphase noch zusätzlich zur Diagnose der Maschine selbst genutzt werden kann, da in dieser Phase der Maschine diejenigen Teile oder Bereiche, welche relativ schnell ihren stationären Betriebszustand erreichen, zu einem Testlauf zur Verfügung stehen, ohne dafür die Funktion der übrigen Maschine zu beeinträchtigen. Derweil wird das "Hochlaufen" in den diesbezüglich langsameren Abschnitten der Maschine erledigt.

Die zur Abbildung der Zustände der verschiedenen Bereiche einer Maschine nötigen Informationen werden der Steuerung über entsprechende Sensoren mitgeteilt. Es ist die Aufgabenstellung des Maschinenkonstrukteurs kritische und interessante Punkte und Bereiche einer Maschine zu benennen, an denen die Sensoren angeordnet werden sollen und zusätzlich für jeden Sensor den Wert oder den Wertebereich bekannt zu geben, bei dem oder innerhalb dessen die Abschaltung des diesem Sensor zugeordneten Aktors möglich ist.

Wenn zur Überwachung eines Maschinenbereiches mehrere Sensoren erforderlich sind, so ist eine Abschaltung eines Aktors nur dann zulässig, wenn sämtliche relevanten Sensoren ihre Freigabe für die Abschaltung erteilt haben.

Ein Beispiel dafür ist der Antrieb eines selbst fahrenden Gerätes, wie z.B. eines automatischen Flurförderfahrzeuges. Für die Energieabschaltung des Fahrantriebes ist es nicht nur erforderlich, dass sich das Fahrzeug tatsächlich nicht mehr bewegt, dass also z.B. ein Drehimpulsgeber auf einer Lauf- oder Antriebsachse des Fahrzeuges das Tempo Null meldet, sondern es muss auch zusätzlich geprüft werden, ob das Fahrzeug gegen ein Wegrollen durch äußere Einwirkungen wie z.B. durch Erschütterungen des Abstellplatzes oder durch den Stoß eines anderen Fahrzeuges oder durch das Wegrollen auf einer leichten Neigung des Abstellplatzes gesichert ist, indem eine zusätzliche Parkbremse oder eine Parksperre aktiviert ist. Zu deren Überwachung wird in den meisten Fällen ein einfacher Kontakt ausreichen, der nur die beiden Zustände "aktiviert" oder "Ruhezustand" meldet.

Eine andere Funktionsbaugruppe kann ein flexibler Schlauch sein, der nicht dauerhaft unter Druck stehen soll, um vorzeitiges Altern und daraus resultierendes Platzen des Schlauches zu vermeiden. Eine Gegenmaßnahme ist die Überwachung des Druckes in diesem Bereich. Sollte vor dem Überführen in den Ruhezustand in diesem Bereich noch ein hoher Druck herrschen, so ist es sinnvoll, diesen Druck durch Zurückpumpen oder durch ein Zurückfließen des im Schlauch enthaltenen Mediums in einen Speichertank abzubauen.

Ein anderes, sehr viel einfacher erscheinendes, aber unter Umständen recht folgenreiches Beispiel ist die Innenbeleuchtung der Fahrerkabine einer zum Teil manuell gesteuerten Maschine. Wenn hier die Innenbeleuchtung der Kabine und der Instrumente noch so lange leuchtet, wie ein Drucksensor im Fahrersitz dessen Belegung anzeigt, kann das ein nennenswerter Sicherheitsgewinn sein.

Im Interesse der Lebensdauer elektronischer Bauteile, sowie für Wartungs- und Reparaturarbeiten ist es z.B. bei elektrischen Steuerungen in Maschinen unerlässlich, sie in längeren Arbeitspausen stromfrei zu schalten.

In einer möglichen Variante des Ruhezustandes ist die gesamte Energieversorgung einer Maschine abgeschaltet. Diese Abschaltung darf die Steuerung erst dann zulassen, wenn die Istwerte sämtlicher Sensoren den für die Abschaltung abgespeicherten Sollwert oder Sollwertebereich erreicht haben und daraufhin alle Aktoren in der vorgesehenen Reihenfolge deaktiviert worden sind.

Im einfachsten Fall ist der Ruhezustand bereits dadurch definiert, dass für einen bestimmten Teil der Sensoren der Maschine ein bestimmter Wert oder ein Wertebereich zu erreichen ist. Es kann andere Sensoren in der Maschine geben, deren Werte im Ruhezustand beliebig sein können und die deshalb auch nicht überwacht werden müssen.

Es kann jedoch auch erforderlich sein, dass für die Erreichung des Ruhezustandes noch andere Bedingungen eingehalten werden müssen, wie z.B. die Überprüfung, ob von der Steuerung auch Steuerbefehle an Aktoren abgegeben worden sind, die mangels entsprechender Sensoren nicht überprüfbar sind oder ob bestimmte Aktoren in einer bestimmten Reihenfolge angesteuert worden sind. Erst wenn alle diese Bedingungen erfüllt sind und dann auch noch alle Sensoren Werte melden, die in dem für den Ruhezustand zulässigen Bereich liegen, kann die Steuerung melden, dass der Ruhrzustand erreicht ist.

Darauf kann sich - wenn es so vorgesehen worden ist - auch die Steuerung selbst in einen Ruhezustand versetzen, wie z.B. die Überwachung der Sensoren einzustellen und keine Daten mehr zu speichern bis hin zu dem Extrem, sich selbst die Energieversorgung abzuschalten.

In einer weiter verfeinerten Variante sind für den Ruhezustand verschiedene Stufen mit zunehmendem Umfang der Deaktivierung von Aktoren und ganzen Gruppen von Aktoren definiert, die in Abhängigkeit von der zu erwartenden Betriebspause vor der Überführung in den Ruhezustand wählbar sind oder die nach einer gewissen Dauer der Pause selbsttätig von der Steuerung aktiviert werden.

Eine derartige, der Funktion, der Sicherheit und der Lebensdauer der Maschine angepasste und dienliche Abschaltreihenfolge ist mit dem Schlagwort "intelligentes Abschalten" treffend beschrieben. Dabei ist die "Intelligenz" in dem für das Abschalten zuständigen Teil der Steuerung lokalisiert.

Dieser Teil der Steuerung kann nur dann über den Zeitpunkt des Abschaltens vom Hauptschalter hinaus aktiv bleiben, wenn ihm auch die dafür erforderliche Energie zugeführt wird. Eine Möglichkeit dafür ist eine separate Energieversorgung, wie z.B. ein Akkumulator, der beim Anliegen der Gesamtenergieversorgung aufgeladen wird, und während des ansonsten stromlosen Zustandes diesen Teil der Steuerung versorgt.

Derartige Akkumulatoren haben erfahrungsgemäß jedoch eine begrenzte Lebensdauer, sodass sie ihrerseits wieder einer speziellen Überwachung bedürfen. Das kann vermieden werden, wenn auch der abschaltrelevante Teil der Steuerung mit der Hauptenergieversorgung verbunden ist. Die Erfindung schlägt vor, dass er über zwei Pfade mit dieser Energieversorgung verbunden ist. Davon ist der erste Pfad vom Hauptschalter auftrennbar und wieder schließbar. Der zweite Pfad ist jedoch auch nach dem Auftrennen des ersten Pfades durch eine sog. "Selbsthaltung" auch noch nach der Auftrennung des ersten Pfades geschlossen.

Eine derartige Selbsthaltung kann z.B. mittels eines Relais mit zwei Kontakten verwirklicht werden. Der zweite Kontakt schließt bei der Aktivierung des Relais eine zweite Verbindung der Arbeitsspule des Relais zur Energieversorgung, sodass sich das Relais "selbst" aktiv hält. Wenn dieser Stromkreis über die Steuerung geführt wird, so kann die Steuerung diese Selbsthaltung öffnen, sodass das Relais abfällt und dann auch der zweite Pfad spannungsfrei ist. Dadurch wird der Steuerung solange Energie zugeführt, bis sie "selbst" entscheidet, nunmehr keine Energie zu benötigen und sich daraufhin von der Energiezufuhr trennt.

Ein Vorteil der Selbsthaltung ist, dass die Steuerung von sich aus die Energiezufuhr nicht wieder anschalten kann, sondern dass die neuerliche Aktivierung des Relais von außen her erfolgen muss, weshalb auch bei einer Fehlfunktion dieses Teiles der Steuerung kein Zuschalten der Energie mehr möglich ist.

In einer weiteren Ausführungsvariante schlägt die Erfindung vor, dass die Selbsthaltung von der Steuerung erst dann deaktivierbar ist, wenn von allen Datenspeichern in der Steuerung jeweils eine Meldung vorliegt, dass alle Datenspeicherungen abgeschlossen sind. Damit wird sichergestellt, dass alle Speichervorgänge, die zum laufenden Betrieb und/oder zur Datenspeicherung während des Abschaltprozesses erforderlich sind, auch vollständig abgeschlossen sind, bevor dieser Teil der Steuerung von der Betriebsspannung getrennt wird. Auf diese Weise wird vermieden, dass durch willkürliches Unterbrechen eines Speichervorganges unsinnige und/oder gefährliche Zustände oder Betriebsabläufe entstehen könnten.

Eine weitere mögliche Ausstattungsvariante ist die Erkennung von "fehlerhaften Betriebszuständen" während des Abschaltvorganges. Dazu wird keine zusätzliche Hardware benötigt, sondern nur eine entsprechende Auswertung der für die Funktion notwendigen Signale aus der Steuerung und den von der Steuerung auszuwertenden Sensoren. Es ist die Kernaufgabe der elektronischen Steuerung, den Aktoren an der Maschine Steuerungsbefehle zu erteilen und die Wirkung dieser Steuerungsbefehle anhand von Sensorsignalen zu überprüfen und ggf. daraufhin die Steuersignale für die Aktoren zu korrigieren.

Ein Beispiel ist der Fahrantrieb eines Flurförderfahrzeuges. Dazu verbindet die Steuerung den Elektromotor über einen Leistungshalbleiter mit der Energieversorgung. Der Leistungshalbleiter regelt durch sehr schnelles Aus- und Einschalten den Strom durch die Wicklungen des Elektromotors und bewirkt somit das erforderliche Drehmoment im Fahrantrieb. Über einen Drehimpulsgeber auf der Welle des Motors oder auf einer anderen, mit dem Antrieb verbundenen Welle, wird der Steuerung gemeldet, ob tatsächlich die gewünschte Geschwindigkeit erreicht worden ist. Wenn nicht, wird der Steuerungsbefehlt entsprechend geändert.

Für die Abschaltprozedur wird im Normalfall davon ausgegangen, dass der Hauptschalter erst dann betätigt wird, wenn alle Fahrantriebe stehen. Die Erfahrung zeigt jedoch, dass nicht jeder Maschinenbediener sich stets daran hält, sondern mitunter einen Schlüssel, der als Hauptschalter dient, bereits dann abzieht, wenn sich das Fahrzeug noch etwas bewegt. Auch in diesem Fall einer nicht korrekten Bedienung muss ein stabiler Zustand mit Sicherheit erreicht werden, d.h. das Fahrzeug muss sich "selbst" abbremsen und zum Stehen kommen. Diese Reaktion auf ein vorzeitiges Betätigen des Hauptschalters muss natürlich in der Steuerung entsprechend programmiert sein.

Wenn zu diesem Befehl "Anhalten" noch eine bestimmte Bremsverzögerung einprogrammiert ist, also das Einhalten einer Mindestverzögerung gefordert wird, so kann die Steuerung am Drehimpulsgeber auf dem Fahrantrieb nachprüfen, ob die geforderte Verzögerung tatsächlich erreicht wird. Wenn der Istwert sehr deutlich vom Sollwert abweicht, so ist das ein unerwünschter Zustand, der zumindest in einem Datenspeicher abgelegt werden sollte, idealer Weise aber auch als eine Fehlermeldung dem Maschinenführer durch ein Datendisplay, einen Lautsprecher oder eine andere Mensch-Maschine-Interface gemeldet werden sollte und zusätzlich in einen entsprechenden Fehlerspeicher abgelegt werden sollte.

In einer sehr vollständig ausgestatteten Variante wird diese Fehlermeldung beim Abschalten aktiviert. Wenn ein Wiederanschalten und ein weiterer Betrieb der Maschine trotz dieses Fehlers möglich erscheint, sollte er dennoch beim Wiedereinschalten als Information dem Benutzer mitgeteilt werden, sodass er z. B. eine vorbeugende Wartungsmaßnahme auslösen kann.

Ein "fehlerhaftes" Reagieren der Maschine wird also dadurch erfasst, dass die Reaktion auf einen Aktorbefehl an den relevanten Sensoren Signale erzeugt, die nicht innerhalb eines vorgegebenen Bereiches liegen. Dieser vorgegebene Bereich ist ebenfalls in der Steuerung als Parameter hinterlegt.

Insbesondere bei sehr dynamischen Regelvorgängen, wie einem Fahrantrieb müssen relativ größere Regelabweichungen während Beschleunigungen und Verzögerungen toleriert werden. Für derartige Betriebszustände kann es mitunter nicht ausreichen, nur die Differenz zwischen dem Istwert und dem Sollwert zu erfassen und zu überprüfen. Bei derartigen Anwendungsfällen kann es stattdessen zu einer besseren Unterscheidung von Fehlern und betriebsbedingten Regelabweichungen beitragen, wenn die Differenz zwischen dem aktuellen Sollwert und dem vorhergehenden mit der Differenz des jeweiligen aktuellen und des vorhergehenden Sensorsignales verglichen wird. Dadurch können Regelabweichungen mit einer höheren Genauigkeit erfasst werden.

Eine weitere mögliche Zusatzfunktion ist, dass in einem Betriebsdatenspeicher der Steuerung für die Diagnose der Maschine wichtige Daten während des Abschaltzyklus, also nach dem Deaktivieren des Hauptschalters und vor dem Abschalten der gesamten Energieversorgung erfasst und abgelegt werden. Dieser Datenspeicher sollte permanent sein, d.h. auch ohne eine externe Energieversorgung ausgelesen werden können.

Ein interessantes Beispiel für eine Maschine mit einer erfindungsgemäßen Überwachungseinrichtung ist ein Flurförderfahrzeug. Ein Aktor kann z.B. ein Lüfter sein, der in Abhängigkeit von der Temperatur des Kühlluftstromes noch nach dem Abschalten der Maschine so lange weiterläuft, bis die zulässige Temperatur für das Abschalten erreicht ist. Ein anderes Beispiel eines Aktors ist die Innenbeleuchtung einer Fahrerkabine, die noch so lange aktiv ist, wie ein Kontakt für die Belastung eines Sitzes meldet, dass die Innenbeleuchtung noch benötigt wird. Ein anderes Beispiel für einen Sensor ist ein Kontakt an einem Handbremshebel oder ein Füllstandsmessgerät in einem Behälter oder ein Drehimpulsgeber auf einer verschwenkbaren oder rotierenden Achse.

Die Erfindung empfiehlt, dass beim Wiedereinschalten diejenigen Betriebsdaten zur Bildung der aktuellen Istwerte ausgelesen werden können, die im Betriebsdatenspeicher abgelegt worden sind. Es ist z.B. vorteilhaft, bei einem Positionierantrieb, der zur Positions-Istwert-Erfassung nur mit einem Drehimpulsgeber ausgerüstet ist, abzuspeichern, in welcher Position er zum Halten gekommen ist und - falls der Antrieb im spannungslosen Zustand aus dieser Position herausbewegt worden ist - in welcher Richtung der zur Abschaltposition nächste Referenzschalter zu erreichen ist, sodass eine Referenzfahrt zur Positions-Istwert-Bestimmung der jeweiligen Achse schnell durchgeführt werden kann.

In einer weiteren Ausführungsvariante sind in der Steuerung Maßnahmenkataloge parametrierbar und abrufbar, die in Abhängigkeit der jeweiligen Istwerte der Sensoren beim Start auszuführende sonstige Maßnahmen abspeichern. Bei einem Flurförderfahrzeug mit einem zu geringen Reifenluftdruck kann dies z.B. eine Geschwindigkeitsbegrenzung sein.

Sinnvoller Weise sollte diese Meldung möglichst im Klartext dem jeweiligen Maschinenführer mitgeteilt werden und idealer Weise durch die Aufforderung ergänzt werden, die nächstliegende Füllstation für die Reifen anzufahren.

Als eine weitere Variante wird vorgeschlagen, das Hauptschütz als elektronischen Schalter auszuführen, der anstelle von mechanischen Kontakten einen Halbleiter zur Trennung und zum Schließen des Versorgungsstromkreises enthält. Ein derartiger elektronischer Schalter kann mit der Steuerung eine gemeinsame Baugruppe bilden. Dazu können z.B. Steuerung und Schalter in einem gemeinsamen Gehäuse untergebracht werden. Es ist sogar denkbar, dass alle Bauelemente zur Ansteuerung der Steuerung und zur Ansteuerung des Hauptschützes auf einer gemeinsamen Elektronikplatine angeordnet sind. Ebenso können die Leistungshalbleiter der Steuerung und des Hauptschützes als gemeinsame Baugruppe ausgeführt werden, also z.B. auf einem gemeinsamen Kühlkörper montiert werden.

Die Erfindung schlägt das folgende Verfahren zur Überführung einer Maschine in einen Ruhezustand vor: In einem ersten Schritt werden für alle Sensoren die für den Ruhezustand zutreffenden Sollwerte oder Sollwertebereiche sowie für die Aktoren eine Reihenfolge und erforderlichenfalls auch noch andere Bedingungen für die Überführungsphase in den Ruhezustand in die Steuerung eingegeben. In einem zweiten Schritt wird der Hauptschalter 6 manuell deaktiviert. In einem dritten Schritt gibt die Steuerung solange Steuerbefehle 31 an den in der Reihenfolge der Überführungsphase zuerst in den Ruhezustand zu versetzenden Aktor 3, bis die Istwerte sämtlicher für diesen Aktor 3 relevanten Sensoren 4 die für den Ruhezustand zutreffenden Sollwerte oder Sollwertebereiche erreicht haben.

In einem vierten Schritt gibt die Steuerung auch an die weiteren Aktoren gem. der für die Überführungsphase festgelegten Reihenfolge der Aktoren Steuerbefehle aus, bis die Istwerte sämtlicher für diese Aktoren relevanten Sensoren die für den Ruhezustand zutreffenden Sollwerte oder Sollwertebereiche erreicht haben

In einer Ausführungsvariante des vierten Schrittes kann zusätzlich zu den Istwerten der Sensoren überprüft werden, ob auch andere erforderliche Bedingungen für die Erreichung des Ruhezustandes ausgeführt worden sind, wie z.B. die Ausgabe von Steuerbefehlen an solche Aktoren, deren Auswirkung in der Steuerung nicht durch einen entsprechenden Sensor-Istwert überprüfbar ist.

Als eine mögliche Erweiterung des Verfahrens können nach dem zweiten oder dritten Schritt auch die Istwerte wenigstens eines Sensors zum Zeitpunkt der Deaktivierung des Hauptschalters erfasst und in einem Betriebsdatenspeicher abgelegt werden.

Als eine mögliche Ausführungsform für den Ruhezustand kann, nachdem allen Aktoren geeignete Steuerbefehle zur Überführung in den Ruhestand erteilt worden sind, so dass die Istwerte sämtlicher Sensoren den für die Abschaltung abgespeicherten Sollwert oder Sollwertebereich erreicht haben, die gesamte Energieversorgung der Maschine abgeschaltet werden.

Eine weitere mögliche Variante des Verfahrens ist es, bei der Überführung einer Maschine aus einem definierten Ruhezustand zurück in eine vollständige Betriebsbereitschaft die im Betriebsdatenspeicher abgelegten Istwerte vom Zeitpunkt der Überführung in den Ruhezustand auszulesen und die diesen Werten zugeordneten Maßnahmen aus der Startmaßnahmenliste in der Steuerung zu aktivieren. Die Steuerung führt also diese Maßnahmen durch, wobei die Istwerte aus dem Betriebsdatenspeicher als Ausgangspunkte für die Berechnung der nächsten Steuerbefehle an diejenigen Aktoren dienen, die diesen Istwerten zugeordnet sind.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:

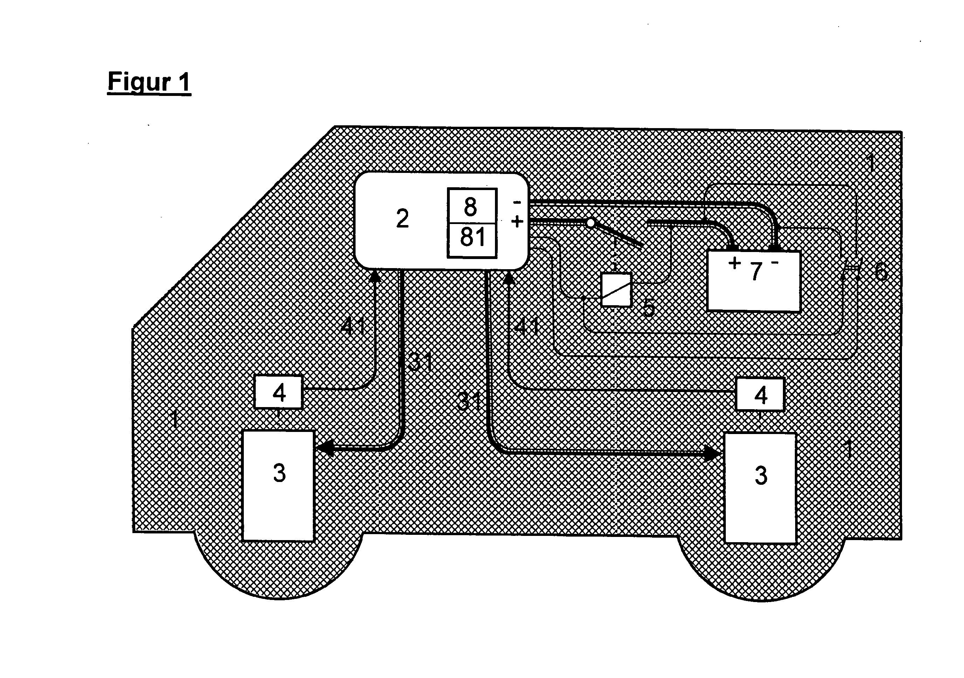

- Figur 1: Prinzipschnitt durch ein Flurförderfahrzeug mit erfindungsgemäßer Überwachungseinrichtung

In Figur 1 ist ein Schnitt durch ein Flurförderfahrzeug als ein kreuzschraffierten Block angedeutet, aus dem zwei Räder herausragen, die zum Verfahren dienen. Jedem Rad ist ein Aktor 3 zugeordnet, wie z.B. ein Fahrantrieb, dessen Reaktionen durch einen Sensor 4 überwacht werden, z.B. einen auf der Welle des Fahrantriebes montierten Drehimpulsgeber. In Figur 1 sind durch doppelte Linien Verbindungen mit einer hohen Energiedichte zur Übertragung von Leistungen dargestellt und mit einfachen Linien Verbindungen zur Übertragung von Informationen und Steuerungsbefehlen.

In Figur 1 ist durch ein Rechteck mit abgerundeten Ecken die Steuerung 2 symbolisiert. Sie versorgt über zwei Leistungsausgänge jeweils einen Aktor 3, - hier die Fahrantriebe - mit elektrischer Energie, der für den jeweiligen Betriebszustand erforderlichen Stärke. Über die Istwerte 41 der beiden Sensoren 4 kann die Steuerung 2 den aktuellen Stand der Aktoren 3 - hier der Fahrantriebe - erfassen.

Zur Versorgung mit elektrischer Energie ist die Steuerung 2 über zwei - doppelllinig dargestellte - Stromleiter mit der Energieversorgung 7 verbunden. Diese Verbindung kann durch das Hauptschütz 5 unterbrochen werden. Dafür dient der Schalter 6, z.B. ein Schlüsselschalter, über den die Spule des Hauptschützes 5 mit der Energieversorgung 7 verbunden wird und daraufhin den Kontakt schließt, sodass die Steuerung 2.mit Energie versorgt wird.

In dem Ausführungsbeispiel der Figur 1 ist die Steuerung 2 dauerhaft mit dem Minuspol der Energieversorgung 7 verbunden. Ebenso ist die Ansteuerung der Spule des Hauptschützes 5 mit dem Pluspol der Energieversorgung dauerhaft verbunden. Solange die Steuerung diese Spule auch mit dem Minuspol der Energieversorgung 7 verbindet, ist das Hauptschütz 5 aktiv und die Steuerung 2 mit Energie versorgt.

Ein zweiter Stromkreis zur Versorgung des Hauptschutzes 5 wird über den Kontakt des Schalters 6 geschlossen. Wenn dieser Kontakt geschlossen wird, so schließt sich auch der zweite Kontakt des Schalters 6, über den ein Eingang der Steuerung 2 mit positivem Potential verbunden wird. Dieses Potential ist beim Einschalter der Maschine 1 der Befehl an die Steuerung 2 zum Auslösen der Hochlaufprozedur. Sobald dieses Potential wieder abfällt - durch Offnen des 2ten Kontaktes am (Schlüssel-) Schalter 6 - ist das der Befehl an die Steuerung 2 zum Auslösen der Abschaltprozedur.

In Figur 1 ist innerhalb der Steuerung 2 der Betriebsdatenspeicher 8 dargestellt, in den während der Ausschaltprozedur ermittelte Istwerte 41 der Sensoren 4 ablegbar sind.

Der Betriebsdatenspeicher 8 steht hier als Symbol dafür, dass die Steuerung 2 beim Ausschaltablauf und beim Einschalten überwacht, ob sämtliche Istwert-Meldungen 41 der Sensoren 4 im dafür zulässigen Bereich liegen und deshalb eine Abschaltung bzw. eine Einschaltung der diesen Sensoren 4 zugeordneten Aktoren 4 zulässig ist.

Beim Einschalten werden in einem weiteren Schritt von der Steuerung 2 die in der Startmaßnahmenliste 81 hinterlegten Werte überprüft und mit den Istwerten 41 verglichen. Wenn dabei kein Widerspruch auftaucht, löst die Steuerung 2 die Startprozedur aus.

### Bezugszeichenliste

- 1: Maschine mit Überwachungseinrichtung
- 2: Steuerung der Maschine 1
- 3: Aktor in Maschine 1
- 31: Steuerbefehle für einen Aktor 3
- 4: Sensor in Maschine 1
- 41: Istwert eines Sensors 4
- 5: Hauptschütz zur Versorgung von Steuerung 2, Aktoren 3 und Sensoren 4
- 6: Hauptschalter
- 7: Energieversorgung
- 8: Betriebsdatenspeicher
- 81: Startmaßnahmenliste im Betriebdatenspeicher 8

## Patentansprüche

1. Maschine 1 mit Überwachungseinrichtung zur Überführung in einen definierten Ruhezustand und zurück in eine vollständige Betriebsbereitschaft, bestehend aus
- einer Steuerung 2 oder einem Teil davon, mittels derer
- Aktoren 3 an der Maschine 1 ansteuerbar sind und
- über Sensoren 4 und deren Istwerte 41 die Auswirkungen der Steuerbefehle 31 auf die Aktoren 3 auswertbar sind und
- einem Hauptschütz 5 zum Zu- und Abschalten der gesamten Energieversorgung, der von der Steuerung 2 ansteuerbar ist und
- einem manuell zu betätigenden Hauptschalter 6 zum Aktivieren und Deaktivieren der Maschine 1 und der Steuerung 2,
**dadurch gekennzeichnet, dass**
- von der Steuerung 2
- auch nach der Deaktivierung des Hauptschalters 6 von allen Sensoren 4 weiter Istwerte 41 empfangbar sind und Steuerbefehle 31 an die Aktoren 3 abgebbar und umsetzbar sind und
- für alle Sensoren 4 ein Sollwert oder ein Sollwertebereich speicherbar und abrufbar ist, den sie im Ruhezustand als Istwert 41 abgeben und
- für alle Aktoren 3 eine Reihenfolge untereinander und/oder andere Bedingungen für die Phase der Überführung in den Ruhezustand in der Steuerung speicherbar und abrufbar sind
und
- durch Deaktivierung des Hauptschalters 6 von der Steuerung 2 Steuerbefehle 31 an die Aktoren 3 auslösbar sind, mit denen sie in der vorgegebenen Reihenfolge und unter Einhaltung der anderen vorgegebenen Bedingungen in den Ruhezustand überführbar sind.

2. Maschine 1 nach Anspruch 1, **dadurch gekennzeichnet, dass** der Ruhezustand durch die Sollwerte oder die Sollwertbereiche für die Sensoren 4 vollständig definiert ist.

3. Maschine 1 nach einem der vorhergehenden Ansprüche, **dadurch gekennzeichnet, dass** die Istwerte 41 wenigstens eines Sensors 4 beim Deaktivieren des Hauptschalters 6 und vor dem Abschalten der gesamten Energieversorgung 7 erfassbar und in einem Betriebsdatenspeicher 8 ablegbar sind, aus der sie auch ohne eine Energieversorgung permanent auslesbar sind.

4. Maschine 1 nach Anspruch 3, **dadurch gekennzeichnet, dass** beim Wiedereinschalten die im Betriebsdatenspeicher 8 abgelegten Istwerte 41
- von der Steuerung 2 auslesbar sind und
- als Ausgangspunkte für den Neustart genutzt werden.

5. Maschine 1 nach einem der vorhergehenden Ansprüche, **dadurch gekennzeichnet, dass** die Abschaltung einer gesamten Energieversorgung 7 erst dann möglich ist,
- wenn die Istwerte 41 sämtlicher Sensoren 4 den für die Abschaltung abgespeicherten Sollwert oder Sollwertebereich erreicht haben und
- wenn für alle Aktoren 3 Steuerbefehle zur Überführung in den Ruhezustand erteilt worden sind und
- ein als solcher definierter Ruhezustand eines Aktors auch ohne äußere Energiezufuhr nicht veränderbar ist.

6. Maschine 1 nach einem der vorhergehenden Ansprüche, **dadurch gekennzeichnet, dass** die Steuerungs- und Energieverbindungen eines Aktors 3 abschaltbar sind, wenn
- ein als solcher definierter Ruhezustand eines Aktors auch ohne äußere Energiezufuhr nicht veränderbar ist und
- die Istwerte sämtlicher relevanter Sensoren 4 den für die Abschaltung abgespeicherten Sollwert oder Sollwertebereich erreicht haben.

7. Maschine 1 nach einem der vorhergehenden Ansprüche, **dadurch gekennzeichnet, dass**
die Steuerung 2 über zwei Pfade mit der Energieversorgung 7 verbunden ist, wobei
- der erste Pfad vom Hauptschalter 6 auftrennbar und wieder schließbar ist und
- der zweite Pfad durch eine "Selbsthaltung" auch nach einer Auftrennung des ersten Pfades geschlossen bleibt und
- die Selbsthaltung von der Steuerung 2 deaktivierbar ist.

8. Maschine 1 nach Anspruch 7, **dadurch gekennzeichnet, dass** die Selbsthaltung erst dann von der Steuerung 2 deaktivierbar ist,
- wenn der Ruhezustand erreicht ist und
- wenn von allen Datenspeichern in der Steuerung 2 jeweils eine Meldung vorliegt, dass alle Datenspeicherungen abgeschlossen sind.

9. Maschine 1 nach einem der vorhergehenden Ansprüche, **dadurch gekennzeichnet, dass** von der Steuerung 2
- Steuerbefehle 31 für wenigstens einen Aktor 3 auch über ein Display oder ein anderes Mensch-Maschine-Interface weiter leitbar sind und
- die Ausführung dieses Steuerbefehls 31 manuell z.B. vom Maschinenführer zu erledigen ist und
- die Auswirkung dieser Steuerbefehle 31 über wenigstens einen Sensor 4 erfassbar ist.

10. Maschine 1 nach einem der vorhergehenden Ansprüche, **dadurch gekennzeichnet, dass** von der Steuerung 2
- die Abweichung eines Steuerbefehls 31 an einen Aktor 3 mit dem vorherigen Steuerbefehl 31 an diesen Aktor vergleichbar ist und
- die Differenz dieser beiden Werte erfassbar ist und
- auch bei jedem Sensor 4, auf den sich die Auswirkungen dieser Steuerbefehle 31 erstreckt, die Abweichung des aktuellen Istwertes 41 vom vorherigen Istwert 41 erfassbar ist und
- die Differenz der beiden Steuerbefehle 31 mit der Abweichung der beiden Istwerte 41 voneinander vergleichbar ist.

11. Maschine 1 nach einem der vorhergehenden Ansprüche, **dadurch gekennzeichnet, dass** von der Steuerung 2 nach einer Deaktivierung des Hauptschalters 6 noch erfassbar ist,
- wie groß die Differenz zwischen einem Steuerbefehl 31 für einen Aktor 3 und den darauf reagierenden Istwerten 41 wenigstens eines Sensors 4 ist und
- ob die Differenz einen parametrierbaren Grenzwert überschreitet.

12. Maschine 1 nach einem der vorhergehenden Ansprüche, **dadurch gekennzeichnet, dass**
- sie ein Flurförderfahrzeug ist und/oder
- der Aktor 3 ein Lüfter und/oder eine Innenbeleuchtung und
- der Sensor 4 ein Temperaturfühler im Luftstrom des Lüfters und/oder ein Kontakt für den Stand eines Handbremshebels und/oder ein Kontakt für die Belastung eines Sitzes und/oder ein Füllstandsmessgerät in einem Behälter und/oder ein Drehimpulsgeber auf einer verschwenkbaren oder rotierenden Achse ist.

13. Maschine 1 nach einem der vorhergehenden Ansprüche, **dadurch gekennzeichnet, dass** beim Neustart
- die Steuerung 2 in Abhängigkeit von den aus dem Betriebsdatenspeicher 8 ausgelesenen Werten selbsttätig Maßnahmen ergreift, wobei
- die Maßnahmen in eine Startmaßnahmenliste 81 in der Steuerung 2 einlesbar und von dort abrufbar sind.

14. Maschine 1 nach Anspruch 13, **dadurch gekennzeichnet, dass** die Steuerung 2 während des Abarbeitens dieser Maßnahmen bei der Startprozedur
- eine Information und/oder Hinweise
- auf vorsorglich erforderliche Maßnahmen und/oder zu einem bestimmten Zeitpunkt vom Nutzer durchzuführende Maßnahmen und/oder Fehler und/oder fehlerhafte Betriebszustände
- auf einem Display und/oder mittels eines Lautsprechers und/oder durch ein anderes Mensch-Maschine-Interface
- an den Benutzer weiterleitet.

15. Maschine 1 nach einem der vorhergehenden Ansprüche, **dadurch gekennzeichnet, dass** derjenige Teil der Steuerung 2, welcher für das Abschalten und das Hochfahren der Maschine tätig ist, über eine eigene, permanent mit der Steuerung 2 verbundene Energieversorgung verfügt.

16. Maschine 1 nach einem der vorhergehenden Ansprüche, **dadurch gekennzeichnet, dass** das Hauptschütz 5 als elektronischer Schalter ausgeführt ist, der mit der Steuerung 2 eine gemeinsamen Baugruppe bildet.

17. Verfahren zur Überführung einer Maschine 1 nach einem der vorhergehenden Ansprüche in einen Ruhezustand, **dadurch gekennzeichnet, dass**
- in einem ersten Schritt für alle Sensoren 4 die für den Ruhezustand zutreffenden Sollwerte oder Sollwertebereiche sowie für die Aktoren 3 eine Reihenfolge und andere Bedingungen für die Überführungsphase in den Ruhezustand in die Steuerung 2 eingegeben werden und
- im zweiten Schritt der Hauptschalter 6 manuell deaktiviert wird und
- im dritten Schritt solange Steuerbefehle 31 an den in der Reihenfolge der Überführungsphase zuerst in den Ruhezustand zu versetzenden Aktor 3 gegeben werden, bis die Istwerte sämtlicher für diesen Aktor 3 relevanten Sensoren 4 die für den Ruhezustand zutreffenden Sollwerte oder Sollwertebereiche erreicht haben und
- im vierten Schritt Steuerbefehle 31 an die gem. der festgelegten Reihenfolge der Überführungsphase folgenden Aktoren 3 gegeben werden, bis auch die Istwerte 41 sämtlicher für diese Aktoren 3 relevanten Sensoren 4 die für den Ruhezustand zutreffenden Sollwerte oder Sollwertebereiche erreicht haben

18. Verfahren nach Anspruch 17, **dadurch gekennzeichnet, dass** im vierten Schritt zusätzlich zu den Istwerten 41 der Sensoren 4 überprüft wird, ob auch andere erforderliche Bedingungen für die Erreichung des Ruhezustandes ausgeführt worden sind, wie z.B. Steuerbefehle für solche Aktoren, deren Auswirkung in der Steuerung nicht durch einen entsprechenden Sensor-Istwert überprüfbar ist.

19. Verfahren nach den Ansprüchen 17 oder 18, **dadurch gekennzeichnet, dass** nach dem zweiten oder dritten Schritt auch die Istwerte wenigstens eines Sensors beim Deaktivieren des Hauptschalters erfasst und in einem Betriebsdatenspeicher abgelegt werden.

20. Verfahren nach einem der vorhergehenden Ansprüche 17 bis 19, **dadurch gekennzeichnet, dass** nachdem allen Aktoren 3 Steuerbefehle 31 zur Überführung in den Ruhestand erteilt worden sind und die Istwerte 41 sämtlicher Sensoren 4 den für die Abschaltung abgespeicherten Sollwert oder Sollwertebereich erreicht haben, die gesamte Energieversorgung 7 der Maschine 1 abgeschaltet wird.

21. Verfahren nach einem der vorhergehenden Ansprüche 17 bis 20, **dadurch gekennzeichnet, dass** bei der Überführung einer Maschine 1 aus einem definierten Ruhezustand zurück in eine vollständige Betriebsbereitschaft
- die im Betriebsdatenspeicher 8 abgelegten Istwerte 41 vom Zeitpunkt der Überführung in den Ruhezustand ausgelesen werden und
- die diesen Werten zugeordneten Maßnahmen aus der Startmaßnahmenliste 81 in der Steuerung 2 aktiviert und von der Steuerung 2 durchgeführt werden und
- die Istwerte 41 aus dem Betriebsdatenspeicher 8 als Ausgangspunkte für die Berechnung der nächsten Steuerbefehle an diejenigen Aktoren 3 dienen, die diesen Istwerten 41 zugeordnet sind.
